(19) Europäisches Patentamt
European Patent Office
Office européen des brevets

(11) **EP 1 733 900 B1**

(12) **EUROPEAN PATENT SPECIFICATION**

(45) Date of publication and mention
of the grant of the patent:
**26.08.2009 Bulletin 2009/35**

(51) Int Cl.:
***B60C 11/12*** *(2006.01)*

(21) Application number: **05728490.3**

(22) Date of filing: **08.04.2005**

(86) International application number:
**PCT/JP2005/006900**

(87) International publication number:
**WO 2005/097523 (20.10.2005 Gazette 2005/42)**

(54) **PNEUMATIC TIRE**

LUFTREIFEN

PNEUMATIQUE

(84) Designated Contracting States:
**DE ES FR GB IT**

(30) Priority: **09.04.2004 JP 2004115574**

(43) Date of publication of application:
**20.12.2006 Bulletin 2006/51**

(73) Proprietor: **Bridgestone Corporation
Tokyo 104-8340 (JP)**

(72) Inventor: **SAKAMAKI, Yuji
Kodaira-shi
Tokyo 187-8531 (JP)**

(74) Representative: **Whalley, Kevin
Marks & Clerk LLP
90 Long Acre
London WC2E 9RA (GB)**

(56) References cited:
**JP-A- 9 142 110        JP-A- 11 170 817
JP-A- 11 208 221      JP-A- 2000 142 035
JP-A- 2000 185 526    JP-A- 2003 025 812
JP-A- 2005 041 393**

**Description**

TECHNICAL FIELD

The present invention relates to a pneumatic tire including block rows on a tread.

BACKGROUND ART

Heretofore, in a winter tire (snow tire) or an all-weather tire (all-season tire), it has been known that starting and braking performances thereof are enhanced by increasing a total length of a sipe in a block located in an end region of a tread. For example, a technology has been disclosed, in which a wavy sipe is formed by continuing, with respect to a normal direction of a block tread, surfaces in each of which a train of protrusions and indentations on an inner wall surface of the sipe is tilted, and the braking performance and the like are thus enhanced (for example, refer to Japanese Patent Laid-Open No. 2002-321509, or document JP-A-2000185526).

However, when the length of each sipe is increased, rigidity of the block is decreased, which has resulted in deterioration of driving stability, in particular, of cornering performance, on the snow and a dry road surface.

In this connection, in consideration of the above-described problem, it is an object of the present invention to provide a pneumatic tire which provides compatibility between the starting and braking performances on the snow and the driving stability on the snow and the dry road surface.

DISCLOSURE OF THE INVENTION

In order to achieve the foregoing object, a first feature of the present invention is summarized to be a pneumatic tire including, on a tread, a plurality of block rows defined by circumferential main grooves extended in a tire circumferential direction and by lateral grooves intersecting the circumferential main grooves, wherein a total length of a sipe owned by one block on a tread surface is larger in one block arranged on an end region of the tread than in one block arranged on a center region of the tread, a sipe rigidity index (F) is calculated by $(F) = (1+Ø1) \times (1+Ø2) \times (1+Ø3)$ based on a tread-direction cross-sectional amplitude (Ø1) as a swing range of the sipe on a cross section in a tread direction, the cross section being approximately parallel to a tread surface of the block, on a circumferential cross-sectional amplitude (Ø2) as a swing range of the sipe on a cross section of the block in the circumferential direction, and on a width-direction cross-sectional amplitude (Ø3) as a swing range of the sipe on a cross section of the block in a width direction, and the one block arranged on the end region of the tread has a sipe shape in which at least one of the circumferential cross-sectional amplitude (Ø2) and the width-direction cross-sectional amplitude (Ø3) is present, and the sipe rigidity index (F) of the one block arranged on the end region of the tread is larger than the sipe rigidity index (F) of the one block arranged on the center region of the tread.

A second feature of the present invention is summarized to be a pneumatic tire including, on a tread, a plurality of block rows defined by circumferential main grooves extended in a tire circumferential direction and by lateral grooves intersecting the circumferential main grooves, wherein a number of sipes owned by one block on a tread surface is larger in one block arranged on an end region of the tread than in one block arranged on a center region of the tread, a sipe rigidity index (F) is calculated by $(F) = (1+Ø1) \times (1+Ø2) \times (1+Ø3)$ based on a tread-direction cross-sectional amplitude (Ø1) as a swing range of the sipe on a cross section in a tread direction, the cross section being approximately parallel to a tread surface of the block, on a circumferential cross-sectional amplitude (Ø2) as a swing range of the sipe on a cross section of the block in the circumferential direction, and on a width-direction cross-sectional amplitude (Ø3) as a swing range of the sipe on a cross section of the block in a width direction, and the one block arranged on the end region of the tread has a sipe shape in which at least one of the circumferential cross-sectional amplitude (Ø2) and the width-direction cross-sectional amplitude (Ø3) is present, and the sipe rigidity index (F) of the one block arranged on the end region of the tread is larger than the sipe rigidity index (F) of the one block arranged on the center region of the tread.

Here, "the block (tread-center-region block) arranged on the center region of the tread" refers to a block closest to a tire equatorial plane, and "the block (tread-end-region block) arranged on the end region of the tread" refers to a block located on each of both ends of the tread. Moreover, "the length" refers to an interval between two points, which is measured along a straight line or a curved line.

In the pneumatic tires according to the first and second features, the sipe rigidity index (F) is made larger in the tread-end-region block than in the tread-center-region block, and the rigidity of the tread-end-region block is thus prevented from being decreased. Moreover, the total length of each sipe on the tread surface or the number of sipes is larger in the tread-end-region block than in the tread-center-region block, and accordingly, the starting and braking performances on the snow can be enhanced. Furthermore, the one block arranged on the end region of the tread has the sipe in which at least one of the circumferential cross-sectional amplitude (Ø2) and the width-direction cross-sectional amplitude (Ø3) is present. Accordingly, adjacent portions of the block, which are divided by the sipes, are mutually engaged, thus making it difficult to cause a toppling deformation of the block. Hence, according to the pneumatic tire in accordance with the feature of the present invention, compatibility can be provided between the starting and braking performances on the snow and the driving stability (in particular, the cornering performance) on the snow and the dry road surface.

Moreover, in the pneumatic tires according to the first and second features, it is desirable that the one block arranged on the end region of the tread have a sipe shape in which both of the circumferential cross-sectional amplitude (Ø2) and the width-direction cross-sectional amplitude (Ø3) are present.

Furthermore, in the pneumatic tires according to the first and second features, it is desirable that the one block arranged on the end region of the tread have a sipe shape in which the tread-direction cross-sectional amplitude (Ø1) is present.

Still further, in the pneumatic tires according to the first and second features, it is desirable that the amplitude be formed by forming the sipe into a zigzag shape.

BRIEF DESCRIPTION OF THE DRAWINGS

FIG. 1 is a partial plane-development view of a tread of a pneumatic tire according to an embodiment of the present invention.

FIG. 2 is an enlarged view of a sipe in FIG. 1.

FIG. 3 is a partially enlarged perspective view of a block provided on the pneumatic tire according to the embodiment of the present invention.

FIG. 4 is a view showing a shape of the sipe arranged in the block provided on the pneumatic tire according to the embodiment of the present invention (No. 1).

FIG. 5 is a view showing a shape of the sipe arranged in the block provided on the pneumatic tire according to the embodiment of the present invention (No. 2).

FIG. 6 is a partial plane-development view of a tread of a pneumatic tire according to another embodiment of the present invention (No. 1).

FIG. 7 is a view showing a shape of a sipe arranged in a block provided on the pneumatic tire according to the other embodiment of the present invention (No. 1).

FIG. 8 is a view showing a shape of the sipe arranged in the block provided on the pneumatic tire according to the other embodiment of the present invention (No. 2).

FIG. 9 is a partial plane-development view of a tread of a pneumatic tire according to still another embodiment of the present invention (No. 2).

FIG. 10 is a partial plane-development view of a tread of a pneumatic tire according to yet another embodiment of the present invention (No. 3).

FIG. 11 is a partial plane-development view of a tread of a pneumatic tire according to Comparative example 1.

BEST MODE OF CARRYING OUT THE INVENTION

Next, a description will be made of an embodiment of the present invention with reference to the drawings. The same or similar reference numerals are assigned to the same or similar portions in the following description of the drawings. However, it should be noted that the drawings are schematic, and that a ratio of the respective dimensions and the like differ from the actual ones. Hence, specific dimensions and the like are the ones that should be determined in consideration for the following explanation. Moreover, it is a matter of course that portions in which relations and ratios of mutual dimensions are different from one another are included also in the respective drawings.

(Construction of pneumatic tire)

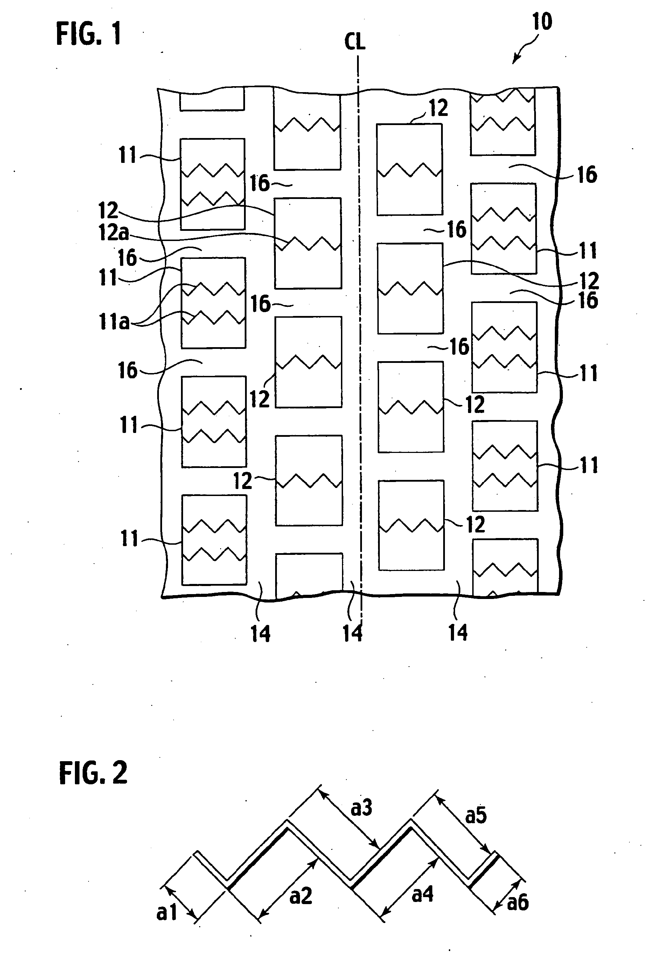

As shown in FIG. 1, a pneumatic tire according to this embodiment includes, on a tread 10, a plurality of block rows 11 and 12 defined by circumferential main grooves 14 extended in a tire circumferential direction and by lateral grooves 16 intersecting the circumferential main grooves. Each block of the block rows (tread-end-region block rows) 11 arranged on end regions of the tread 10 has two zigzag sipes 11a, and each block of the block rows (tread-center-region block rows) 12 arranged on a center region of the tread 10 has one zigzag sipe 12a. As described above, the number of sipes owned by one block on a tread surface is larger by one in the tread-end-region block rows 11 than in the tread-center-region block rows 12.

Moreover, a total length of each sipe owned by one block on the tread surface is larger in the tread-end-region block rows 11 than in the tread-center-region block rows 12. As shown in FIG. 2, the "total length A of each sipe on the tread surface" is a value obtained by adding the respective sides of the zigzag. Specifically, the total length A is obtained as:

$$A = a1+a2+a3+a4+a5+a6 \ldots \ldots \ldots \text{Expression (1)}$$

Note that circumferential arrangement positions of the blocks (blocks 11 or blocks 12), the number of block rows, the number of circumferential main grooves 14, and the like are not limited to those in the embodiment shown in FIG. 1. For example, the number of block rows formed on the tread 10 may be other than four. Moreover, the sipes 11a and 12a may be extended parallel to a tire width direction, or may be extended obliquely thereto.

Moreover, since an internal structure of the pneumatic tire shown in FIG. 1 is a structure of a common radial tire, details of the internal structure will be omitted.

(Shape of sipe)

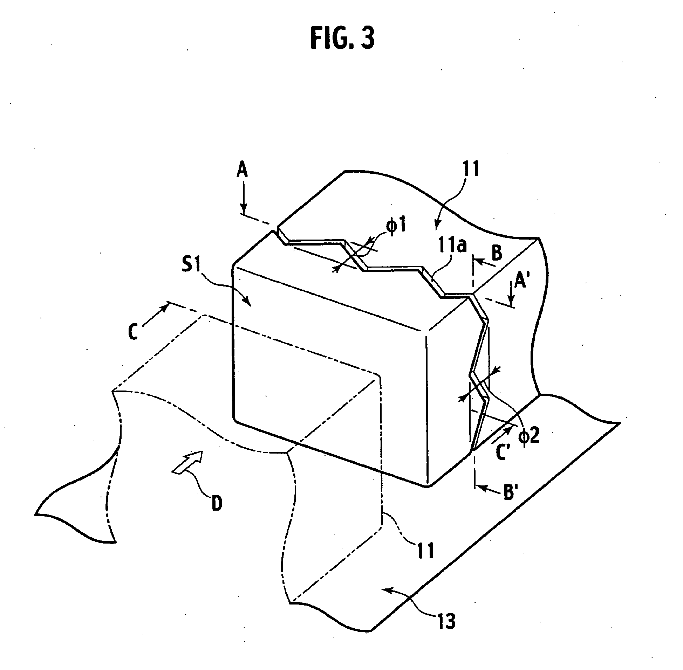

Next, a description will be made of a shape of the above-described sipe 11a arranged on the tread-end-region block 11 and a shape of the above-described sipe 12a arranged on the tread-center-region block 12 while referring to FIG. 3 to FIG. 5. Note that, since the sipes 11a and the sipes 12a have substantially similar shapes to each other, a description will be made below of the shape of each sipe 11a.

FIG. 3 shows a partially enlarged perspective view of the sipe 11a arranged in the tread-end-region block 11. As shown in FIG. 3, the sipe 11a has zigzag shapes on a cross section in a tread direction (A-A' direction), which is approximately parallel to the tread surface of the tread-end-region block 11, on a cross section of the tread-end-region block 11 in the circumferential direction (B-B' direction), and on a cross section of the tread-end-region block 11 in the tread width direction (C-C' direction). A swing range of the zigzag shape of the sipe 11a on the cross section of the tread-end-region block 11 in the tread direction (A-A' direction) is defined as a tread-direction cross-sectional amplitude (Ø1), and a swing range of the zigzag shape of the sipe 11a on the cross section of the tread-end-region block 11 in the circumferential direction (B-B' direction) is defined as a circumferential cross-sectional amplitude (0Ø2).

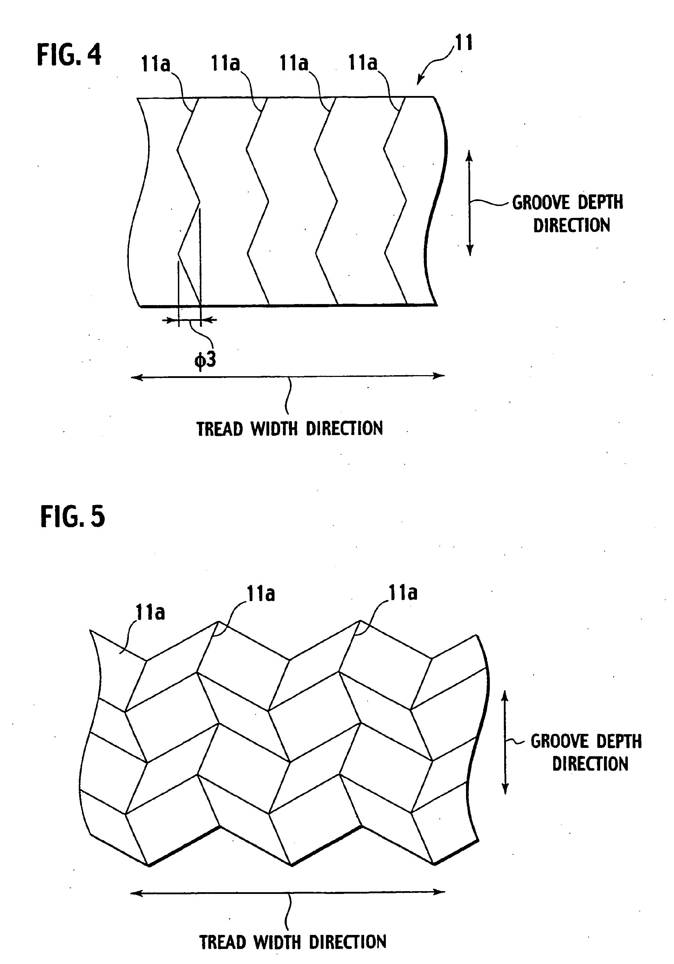

FIG. 4 shows the shape of the sipe 11a when the cross section of the tread-end-region block 11 in the tread width direction is viewed from the C-C' direction shown in FIG. 3. As shown in FIG. 4, on the cross section of the tread-end-region block 11 in the tread width direction, zigzag ridge portions are formed. Specifically, the sipe 11a has the zigzag shape also on the cross section of the tread-end-region block 11 in the tread width direction. Moreover, a swing range of the zigzag shape of the sipe 11a on the cross section of the tread-end-region block 11 in the tread width direction (C-C' direction) is defined as a tread-width-direction cross-sectional amplitude (Ø3).

Moreover, in this embodiment, a sipe rigidity index (F) as an index indicating rigidity of the sipe 11a is calculated based on the tread-direction cross-sectional amplitude (Ø1); the circumferential cross-sectional amplitude (Ø2), and the tread-width-direction cross-sectional amplitude (Ø3), which are described above. Specifically, the sipe rigidity index (F) is decided by using the following expression.

$$\text{Sipe rigidity index (F)}$$
$$= (1+\text{Ø1}) \times (1+\text{Ø2}) \times (1+\text{Ø3}) \ldots \ldots \text{Expression (2)}$$

In this embodiment, the sipe rigidity index (F) is larger in each tread-end-region block 11 than in each tread-center-region block 12. Specifically, the rigidity index of the sipe 12a is larger than the rigidity index of the sipe 11a.

FIG. 5 shows the shape of the sipe 11a viewed from the oblique above in the circumferential direction of the tread, specifically, from a D direction shown in FIG. 3. As shown in FIG. 5, the sipe 11a has zigzag shapes on the cross section of the tread-end-region block 11 in the tread direction, on the cross section of the tread-end-region block 11 in the circumferential direction, and on the cross section of the tread-end-region block 11 in the tread width direction.

Moreover, in a similar way to the sipe 11a shown in FIG. 3 to FIG. 5, the sipe 12a also has zigzag shapes on a cross section of the tread-center-region block 12 in the tread direction, on a cross section of the tread-center-region block 12 in the circumferential direction, and on a cross section of the tread-center-region block 12 in the tread width direction.

(Another construction of pneumatic tire)

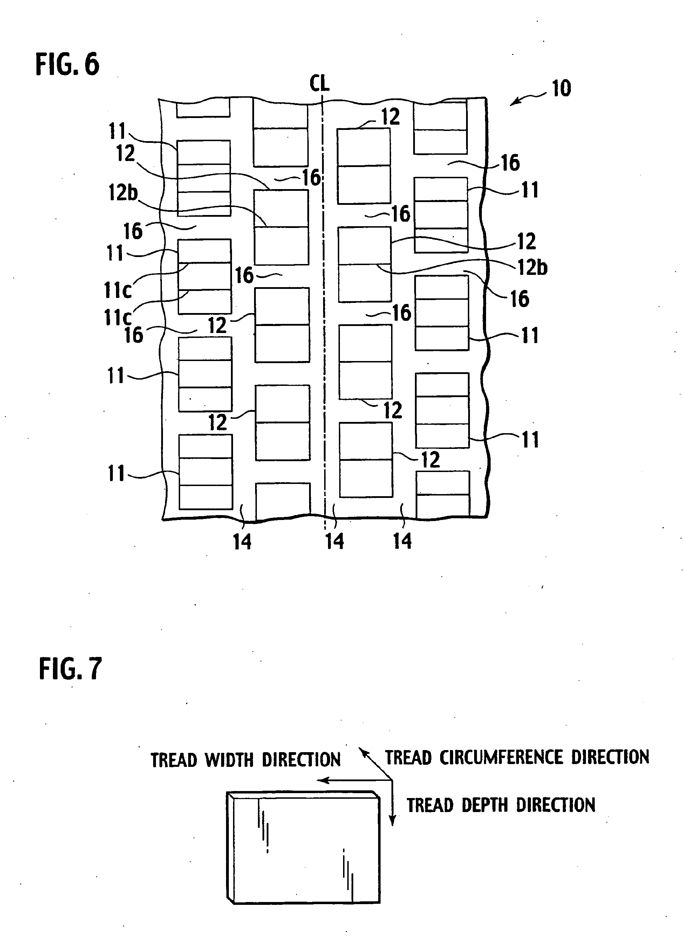

The sipe shape of the pneumatic tire according to this embodiment is not limited to that of FIG. 1, but may be shapes shown in FIG. 6, FIG. 9, and FIG. 10.

In a pneumatic tire shown in FIG. 6, each block of block rows (tread-end-region block rows) 11 arranged on end regions of a tread 10 has two linear sipes 11c, and each block of block rows (tread-center-region block rows) 12 arranged on a center region of the tread 10 has one linear sipe 12b. As described above, the number of sipes owned by one block on a tread surface is larger in the tread-end-region block rows 11 than in the tread-center-region block rows 12. Moreover, a total length of each sipe owned by one block on the tread surface is larger in the tread-end-region block (rows) 11 than in the tread-center-region block (rows) 12.

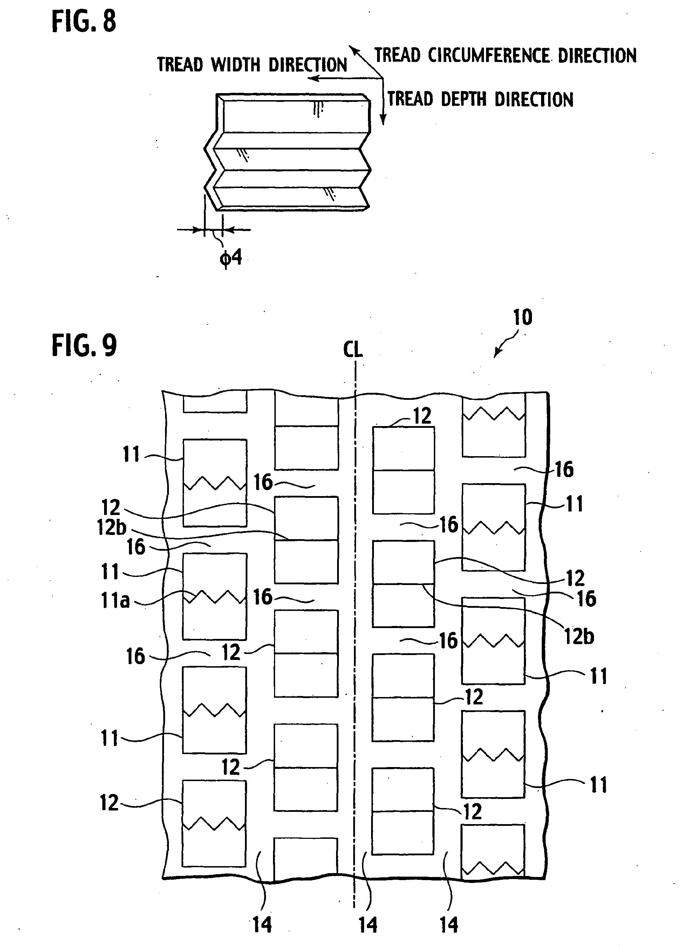

Moreover, each sipe 12b of the tread - center- region blocks 12, which is shown in FIG. 6, has linear shapes on the cross section in the tread direction (A-A' direction of FIG. 3), on the cross section in the circumferential direction (B-B' direction of FIG. 3), and on the cross section in the tread width direction (C-C' direction of FIG. 3) as shown in FIG. 7. Each sipe 11c of the tread-end-regionblocks 11, which is shown in FIG. 6, has linear shapes on the cross section in the tread direction (A-A' direction of FIG. 3) and on the cross section in the tread width direction (C-C' direction of FIG. 3), but has a zigzag shape on the cross section in the circumferential direction (B-B' direction of FIG. 3) as shown in FIG. 8. Hence, the sipe rigidity index (F) is larger in each tread-end-region block 11 than in each tread-center-region block 12. Specifically, the rigidity index of the sipe 11c is larger than the rigidity index of the sipe 12b.

Moreover, in a pneumatic tire shown in FIG. 9, each block of block rows (tread-end-region block rows) 11 arranged on end regions of a tread 10 has one zigzag sipe 11a, and each block of block rows (tread-center-region block rows) 12 arranged on a center region of the tread 10 has one linear sipe 12b. A total length of the sipe owned by one block on the tread surface is larger in the tread-end-region block (rows) 11 than in the tread-center-region block (rows) 12.

Furthermore, each sipe 12b of the tread-center-region blocks 12, which is shown in FIG. 9, has linear shapes on the cross section in the tread direction (A-A' direction of FIG. 3), on the cross section in the circumferential direction (B-B' direction of FIG. 3), and on the cross section in the tread width direction (C-C' direction of FIG. 3) as shown in FIG. 7. Each sipe 11a of the tread-end-region blocks 11, which is shown in FIG. 9, has zigzag shapes on the cross section in the tread direction (A-A' direction of FIG. 3), on the cross section in the circumferential direction (B-B' direction of FIG. 3), and on the cross section in the tread width direction (C-C' direction of FIG. 3) as shown in FIGS. 3 to 5. Hence, the sipe rigidity index (F) is larger in each tread-end-region block 11 than in each tread-center-region block 12. Specifically, the rigidity index of the sipe 11a is larger than the rigidity index of the sipe 12b.

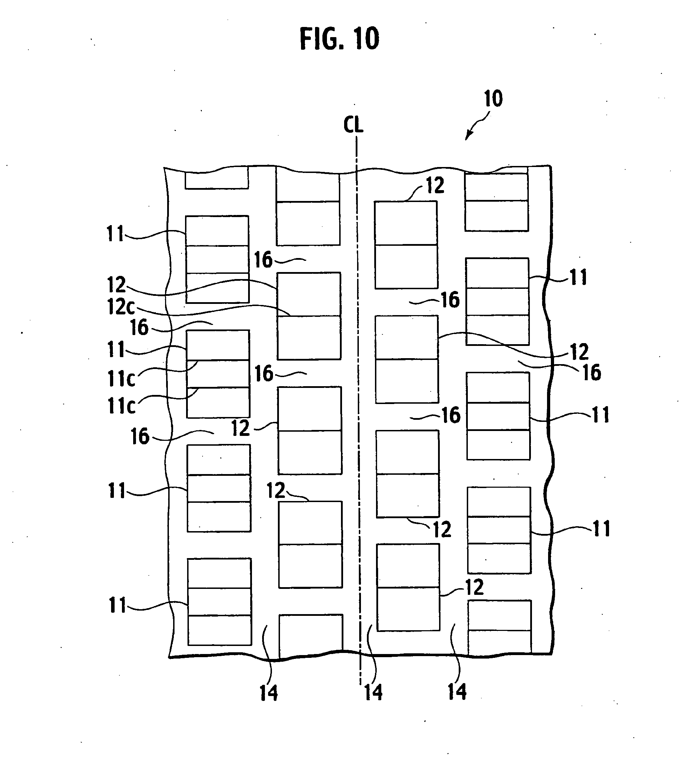

Moreover, in a pneumatic tire shown in FIG. 10, each block of block rows (tread-end-region block rows) 11 arranged on end regions of a tread 10 has two linear sipes 11c, and each block of block rows (tread-center-region block rows) 12 arranged on a center region of the tread 10 has one linear sipe 12c. As described above, the number of sipes owned by one block on a tread surface is larger in the tread-end-region block rows 11 than in the tread-center-region block rows 12. Moreover, a total length of the sipe owned by one block on the tread surface is larger in the tread-end-region block (rows) 11 than in the tread-center-region block (rows) 12.

Furthermore, each sipe 12c of the tread-center-region blocks 12, which is shown in FIG. 10, has linear shapes on the cross section in the tread direction (A-A' direction of FIG. 3) and on the cross section in the tread width direction (C-C' direction of FIG. 3), but has a zigzag shape on the cross section in the circumferential direction (B-B' direction of FIG. 3) as shown in FIG. 8. In a similar way, each sipe 11c of the tread-end-region blocks 11, which is shown in FIG. 10, has linear shapes on the cross section in the tread direction (A-A' direction of FIG. 3) and on the cross section in the tread width direction (C-C' direction of FIG. 3), but has a zigzag shape on the cross section in the circumferential direction (B-B' direction of FIG. 3) as shown in FIG. 8. Here, a circumferential cross-sectional amplitude (04) of the sipe 11c is larger than a circumferential cross-sectional amplitude (04) of the sipe 12c. Hence, the sipe rigidity index (F) is larger in each tread-end-region block 11 than in each tread-center-region block 12. Specifically, the rigidity index of the sipe 11c is larger than the rigidity index of the sipe 12c.

Note that circumferential arrangement positions of the blocks (blocks 11 or blocks 12), the number of block rows, the number of circumferential main grooves 14, and the like are not limited to those in the embodiments shown in FIG. 6, FIG. 9, and FIG. 10. For example, the number of block rows formed on the tread 10 may be other than four. Moreover, the sipes 11a, 11c, 12b, and 12c may be extended parallel to the tire width direction, or may be extended obliquely thereto.

Moreover, since internal structures of the pneumatic tires shown in FIG. 6, FIG. 9, and FIG. 10 are structures of common radial tires, details of the internal structures will be omitted.

(Function and effect of pneumatic tire according to this embodiment)

According to the pneumatic tire in accordance with this embodiment, since the sipe rigidity index (F) is larger in the tread-end-region block 11 than in the tread-center-region block 12, the rigidity of the tread-end-region block 11 is not decreased. Moreover, since the total length of the sipe on the tread surface or the number of sipes is larger in the tread-end-region block 11 than in the tread-center-region block 12, the starting and braking performances on the snow can be enhanced. Hence, according to the pneumatic tire in accordance with a feature of the present invention, compatibility can be provided between the starting and braking performances on the snow and the driving stability (in particular, the cornering performance) on the snow and the dry road surface.

Moreover, while one block arranged on the end region of the tread has the sipe shape in which at least one of the circumferential cross-sectional amplitude (Ø2) and the width-direction cross-sectional amplitude (Ø3) is present, it is desirable that the one block have a sipe shape in which both of the circumferential cross-sectional amplitude (Ø2) and the width-direction cross-sectional amplitude (Ø3) are present. Furthermore, it is desirable that the one block arranged on the end region of the tread have a sipe shape in which the tread-direction cross-sectional amplitude (Ø1) is present. Moreover, it is desirable that the amplitudes be formed in such a manner that these sipes are formed into the zigzag shape.

When the sipes owned by the one block have the zigzag shapes on the cross section in the circumferential direction and on the cross section in the tread width direction, adjacent portions of the block, which are divided by the sipes, are mutually engaged, thus making it difficult to cause a toppling deformation of the block. Moreover, when the sipes owned by the one block have the zigzag shape also on the cross-section in the tread direction, it becomes more difficult to cause the toppling deformation of the block.

In particular, as the amplitudes (tread-direction cross-sectional amplitude Ø1, circumferential cross-sectional amplitude Ø2, width-direction cross-sectional amplitude Ø3) of each zigzag are being larger, it becomes more difficult to cause the deformation.

EXAMPLE

A description will be made below in detail of an example of the pneumatic tire according to the embodiment of the present invention. In order to confirm an effect of the present invention, one type of a tire of the example to which the present invention is applied and two types of tires of comparative examples were produced and evaluated.

A tire size of 205/60R15 91T was employed for each pneumatic tire of Example 1, Comparative example 1, and Comparative example 2, and the following sipe patterns were formed on treads of the respective pneumatic tires

In Example 1, the sipe shape shown in FIG. 1 was employed, and the total length of each sipe on the tread surface, the number of sipes, and the sipe rigidity index (F) were made larger in the tread-end-region blocks 11 than in the tread-center-region blocks 12.

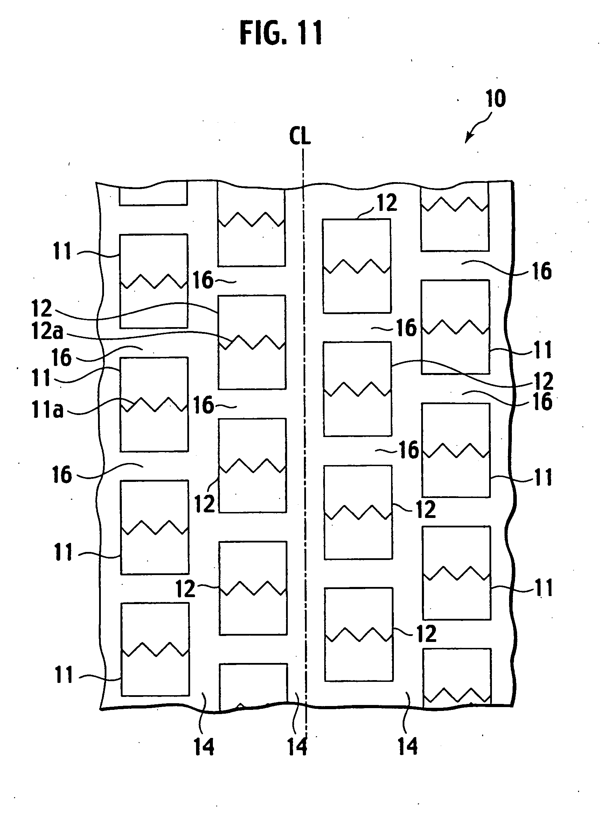

In Comparative example 1, the sipe shape shown in FIG. 11 was employed, and the total length of each sipe on the tread surface, the number of sipes, and the sipe rigidity index (F) were made equivalent between the tread-center-region blocks 12 and the tread-end-region blocks 11.

In Comparative example 2, the sipe shape shown in FIG. 1 was employed, and the total length of each sipe on the tread surface and the number of sipes were made larger in the tread-end-region blocks 11 than in the tread-center-region blocks 12, and the sipe rigidity index (F) was made equivalent between the tread-center-region blocks 12 and the tread-end-region blocks 11.

Detailed design values of Example 1, Comparative example 1, and Comparative example 2 are shown in Table 1.

Table 1

| | Total Length of Sipe in Tread-Center-Region Block (mm) | Total Length of Sipe in Tread-End-Region Block (mm) | Sipe in Tread-Center-region Block | | | | Sipe in Tread-End-region Block | | | |
|---|---|---|---|---|---|---|---|---|---|---|
| | | | φ1 (mm) | φ2 (mm) | φ3 (mm) | Sipe Rigidity Index F | φ1 (mm) | φ2 (mm) | φ3 (mm) | Sipe Rigidity Index F |
| Comparative Example 1 | 45 | 45 | 2 | 2 | 2 | 27 | 2 | 2 | 2 | 27 |
| Comparative Example 2 | 45 | 90 | 2 | 2 | 2 | 27 | 2 | 2 | 2 | 27 |
| Example 1 | 45 | 90 | 2 | 2 | 2 | 27 | 4 | 4 | 4 | 125 |

(Evaluation)

The pneumatic tires of Example 1, Comparative example 1, and Comparative example 2 were individually assembled to wheels with a rim size of 15x6J, and were attached to a front-wheel-drive (FF) vehicle with an engine capacity of 1800 cc. Then, with regard to each of the pneumatic tires, the starting and braking performances on the snow and the driving stability on the snow and the dry road surface were evaluated.

For the starting performance on the snow, the vehicle was started, and a time required when a speed thereof was increased from 0 km/h to 25 km/h was measured. A shorter time represents that the performance is better.

For the braking performance on the snow, the vehicle was braked, and a distance required when the speed thereof was reduced from 25 km/h to 0 km/h was measured. A shorter distance represents that the performance is better.

For the driving stability on the snow and the driving stability on the dry road surface, feeling evaluation by a test driver was performed. Based on a scale of 10 points, a higher numeric value represents that the performance is better.

(Result)

Results of the above are shown in Table 2.

Table 2

|  | Starting Performance on the Snow (s) | Braking Performance on the Snow (m) | Driving Stability on the Snow | Driving Stability on the Dry Road Surface |
|---|---|---|---|---|
| Comparative Example 1 | 12.1 | 14.2 | 6.50 | 6.75 |
| Comparative Example 2 | 10.4 | 12.0 | 5.50 | 5.75 |
| Example 1 | 10.5 | 11.8 | 7.00 | 7.00 |

It is understood that, in Example 1, the starting and braking performances on the snow and the driving stability on the snow and the dry road surface were enhanced as compared with those of Comparative example 1. In particular, the starting and braking performances on the snow were significantly enhanced. Therefore, it is understood that the starting and braking performances on the snow and the driving stability on the snow and the dry road surface were enhanced in such a manner that the total length of each sipe on the tread surface and the sipe rigidity index (F) were made larger in the tread-end-region block 11 than in the tread-center-region block 12.

Moreover, it is understood that, in Example 1, the driving stability on the snow and the dry road surface was enhanced as compared with those of Comparative example 2 though the starting and braking performances on the snow was equivalent thereto. Therefore, it is understood that, in particular, the driving stability on the snow and the dry road surface were enhanced in such a manner that the sipe rigidity index (F) was made larger in the tread-end-region block 11 than in the tread-center-region block 12.

INDUSTRIAL APPLICABILITY

As described above, the pneumatic tire according to the present invention provides the compatibility between the starting and braking performances on the snow and the driving stability on the snow and the dry road surface. Accordingly, the pneumatic tire can be suitably used as a vehicle tire.

**Claims**

1. A pneumatic tire including, on a tread (10), a plurality of block rows (11, 12) defined by circumferential main grooves (14) extended in a tire circumferential direction and by lateral grooves (16) intersecting the circumferential main grooves,
   wherein a total length of a sipe owned by one block on a tread surface is larger in one block (11) arranged on an end region of the tread than in one block (12) arranged on a center region of the tread,
   **characterised in that** a sipe rigidity index (F) is calculated by (F) = (1+Ø1)x(1+Ø2)x(1+Ø3) based on a tread-direction cross-sectional amplitude (Ø1) as a swing range of the sipe on a cross section in a tread direction, the cross section being approximately parallel to a tread surface of the block, on a circumferential cross-sectional amplitude (Ø2) as a swing range of the sipe on a cross section of the block in the circumferential direction, and on a width-direction cross-sectional amplitude (Ø3) as a swing range of the sipe on a cross section of the block in a width direction, and
the one block (11) arranged on the end region of the tread has a sipe shape in which at least one of the circumferential cross-sectional amplitude (Ø2) and the width-direction cross-sectional amplitude (Ø3) is present, and the sipe rigidity index (F) of the one block (11) arranged on the end region of the tread is larger than the sipe rigidity index (F) of the one block (12) arranged on the center region of the tread.

2. The pneumatic tire according to claim 1, wherein the one block (11) arranged on the end region of the tread has a sipe shape in which both of the circumferential cross-sectional amplitude (Ø2) and the width-direction cross-sectional amplitude (Ø3) are present.

3. The pneumatic tire according to any one of claims 1 and 2, wherein the one block (11) arranged on the end region of the tread has a sipe shape in which the tread-direction cross-sectional amplitude (Ø1) is present.

4. The pneumatic tire according to any one of claims 1 to 3, wherein the amplitude is formed by forming the sipe into a zigzag shape.

5. A pneumatic tire including, on a tread (10), a plurality of block rows defined by circumferential main grooves (14) extended in a tire circumferential direction and by lateral grooves (16) intersecting the circumferential main grooves, wherein a number of sipes owned by one block on a tread surface is larger in one block (11) arranged on an end region of the tread than in one block (12) arranged on a center region of the tread, **characterised in that** a sipe rigidity index (F) is calculated by $(F) = (1+Ø1) \times (1+Ø2) \times (1+Ø3)$ based on a tread-direction cross-sectional amplitude (Ø1) as a swing range of the sipe on a cross section in a tread direction, the cross section being approximately parallel to a tread surface of the block, on a circumferential cross-sectional amplitude (Ø2) as a swing range of the sipe on a cross section of the block in the circumferential direction, and on a width-direction cross-sectional amplitude (Ø3) as a swing range of the sipe on a cross section of the block in a width direction, and
the one block (11) arranged on the end region of the tread has a sipe shape in which at least one of the circumferential cross-sectional amplitude (Ø2) and the width-direction cross-sectional amplitude (Ø3) is present, and the sipe rigidity index (F) of the one block (11) arranged on the end region of the tread is larger than the sipe rigidity index (F) of the one block (12) arranged on the center region of the tread.

6. The pneumatic tire according to claim 5, wherein the one block (11) arranged on the end region of the tread has a sipe shape in which both of the circumferential cross-sectional amplitude (Ø2) and the width-direction cross-sectional amplitude (03) are present.

7. The pneumatic tire according to any one of claims 5 and 6, wherein the one block (11) arranged on the end region of the tread has a sipe shape in which the tread-direction cross-sectional amplitude (Ø1) is present.

8. The pneumatic tire according to any one of claims 5 to 7, wherein the amplitude is formed by forming the sipe into a zigzag shape.

**Patentansprüche**

1. Luftreifen, der auf einer Lauffläche (10) eine Vielzahl von Blockreihen (11, 12) aufweist, die durch periphere Hauptrillen (14), die sich in einer Reifenumfangsrichtung erstrecken, und durch seitliche Rillen (16) definiert werden, die die peripheren Umfangsrillen schneiden,
wobei eine Gesamtlänge einer Lamelle, die ein Block auf einer Lauffläche aufweist, in einem Block (11), der in einem Endbereich der Lauffläche angeordnet ist, größer ist als in einem Block (12), der in einem mittleren Bereich der Lauffläche angeordnet ist,
**dadurch gekennzeichnet, dass** ein Lamellensteifigkeitsindex (F) berechnet wird mittels $(F) = (1 + Ø1) \times (1 + Ø2) \times (1 + Ø3)$, basierend auf einer Querschnittsamplitude (Ø1) in Lauffflächenrichtung als ein Schwingbereich der Lamelle in einem Querschnitt in einer Laufflächenrichtung, wobei der Querschnitt annähernd parallel zu einer Lauffläche des Blockes verläuft, einer Querschnittsamplitude (Ø2) in Umfangsrichtung als ein Schwingbereich der Lamelle in einem Querschnitt des Blockes in der Umfangsrichtung und auf einer Querschnittsamplitude (Ø3) in Breitenrichtung als ein Schwingbereich der Lamelle in einem Querschnitt des Blockes in einer Breitenrichtung, und
der eine Block (11), der im Endbereich der Lauffläche angeordnet ist, eine Lamellenform aufweist, bei der mindestens eine der Querschnittsamplitude (Ø2) in Umfangsrichtung und der Querschnittsamplitude (Ø3) in Breitenrichtung vorhanden ist, und der Lamellensteifigkeitsindex (F) des einen Blockes (11), der im Endbereich der Lauffläche angeordnet ist, größer ist als der Lamellensteifigkeitsindex (F) des einen Blockes (12), der im mittleren Bereich der Lauffläche angeordnet ist.

2. Luftreifen nach Anspruch 1, bei dem der eine Block (11), der im Endbereich der Lauffläche angeordnet ist, eine Lamellenform aufweist, bei der sowohl die Querschnittsamplitude (Ø2) in Umfangsrichtung als auch die Querschnittsamplitude (Ø3) in Breitenrichtung vorhanden sind.

3. Luftreifen nach einem der Ansprüche 1 und 2, bei dem der eine Block (11), der im Endbereich der Lauffläche angeordnet ist, eine Lamellenform aufweist, bei der die Querschnittsamplitude (Ø1) in Lauffflächenrichtung vorhanden ist.

4. Luftreifen nach einem der Ansprüche 1 bis 3, bei dem die Amplitude durch Bilden der Lamelle in einer Zickzackform gebildet wird.

5. Luftreifen, der auf einer Lauffläche (10) eine Vielzahl von Blockreihen aufweist, die durch periphere Hauptrillen (14), die sich in einer Reifenumfangsrichtung erstrecken, und durch seitliche Rillen (16) definiert werden, die die peripheren Umfangsrillen schneiden,
wobei eine Anzahl von Lamellen, die ein Block auf einer Lauffläche aufweist, in einem Block (11), der in einem Endbereich der Lauffläche angeordnet ist, größer ist als in einem Block (12), der in einem mittleren Bereich der Lauffläche angeordnet ist,
**dadurch gekennzeichnet, dass** ein Lamellensteifigkeitsindex (F) berechnet wird mittels (F) = (1 + Ø1) x (1 + Ø2) x (1 + Ø3), basierend auf einer Querschnittsamplitude (Ø1) in Lauffflächenrichtung als ein Schwingbereich der Lamelle in einem Querschnitt in einer Lauffflächenrichtung, wobei der Querschnitt annähernd parallel zu einer Lauffläche des Blockes verläuft, einer Querschnittsamplitude (Ø2) in Umfangsrichtung als ein Schwingbereich der Lamelle in einem Querschnitt des Blockes in der Umfangsrichtung und auf einer Querschnittsamplitude (03) in Breitenrichtung als ein Schwingbereich der Lamelle in einem Querschnitt des Blockes in einer Breitenrichtung, und der eine Block (11), der im Endbereich der Lauffläche angeordnet ist, eine Lamellenform aufweist, bei der mindestens eine der Querschnittsamplitude (02) in Umfangsrichtung und der Querschnittsamplitude (03) in Breitenrichtung vorhanden ist, und der Lamellensteifigkeitsindex (F) des einen Blockes (11), der im Endbereich der Lauffläche angeordnet ist, größer ist als der Lamellensteifigkeitsindex (F) des einen Blockes (12), der im mittleren Bereich der Lauffläche angeordnet ist.

6. Luftreifen nach Anspruch 5, bei dem der eine Block (11), der im Endbereich der Lauffläche angeordnet ist, eine Lamellenform aufweist, bei der sowohl die Querschnittsamplitude (02) in Umfangsrichtung als auch die Querschnittsamplitude (Ø3) in Breitenrichtung vorhanden sind.

7. Luftreifen nach einem der Ansprüche 5 und 6, bei dem der eine Block (11), der im Endbereich der Lauffläche angeordnet ist, eine Lamellenform aufweist, bei der die Querschnittsamplitude (01) in Lauffflächenrichtung vorhanden ist.

8. Luftreifen nach einem der Ansprüche 5 bis 7, bei dem die Amplitude durch Bilden der Lamelle in einer Zickzackform gebildet wird.

**Revendications**

1. Bandage pneumatique, englobant sur une bande de roulement (10) plusieurs régions de pavés (11, 12) défies par des rainures circonférentielles principales (14) s'étendant dans la direction circonférentielle du bandage pneumatique, et par des rainures latérales (16) coupant les rainures circonférentielles principales;
une longueur totale d'une lamelle appartenant à un pavé sur la surface d'une bande de roulement étant plus grande dans un pavé (11) agencé dans une région d'extrémité de la bande de roulement que dans un pavé (12) agencé dans une région centrale de la bande de roulement ;
**caractérisé en ce qu'**un indice de rigidité de la lamelle (F) est calculé par la formule (F) = (1+Ø1) x (1+Ø2) x (1+Ø3), sur la base d'une amplitude en section transversale dans une direction de la bande de roulement (0), comme intervalle d'oscillation de la lamelle dans une section transversale dans une direction de la bande de roulement, la section transversale étant pratiquement parallèle à une surface de la bande de roulement du pavé, d'une amplitude en section transversale circonférentielle (Ø2), comme intervalle d'oscillation de la lamelle dans une section transversale du pavé dans la direction circonférentielle, et d'une amplitude en section transversale dans la direction de la largeur (Ø3), comme intervalle d'oscillation de la lamelle dans une section transversale du pavé dans une direction de la largeur ; et

le pavé (11) agencé dans la région d'extrémité de la bande de roulement a une forme de lamelle, dans laquelle au moins une des amplitudes, l'amplitude en section transversale circonférentielle (02) et l'amplitude en section transversale dans la direction de la largeur (Ø3) est présente, l'indice de rigidité de la lamelle (F) du pavé (11) agencé dans la région d'extrémité de la bande de roulement étant supérieur à l'indice de rigidité de la lamelle (F) du pavé (12) agencé dans la région centrale de la bande de roulement.

2. Bandage pneumatique selon la revendication 1, dans lequel le pavé (11) agencé dans la région d'extrémité de la bande de roulement a une forme de lamelle dans laquelle l'amplitude en section transversale circonférentielle (Ø2) et l'amplitude en section transversale dans la direction de la largeur (Ø3) sont présentes.

3. Bandage pneumatique selon l'une quelconque des revendications 1 et 2, dans lequel le pavé (11) agencé dans la région d'extrémité de la bande de roulement a une forme de lamelle dans laquelle l'amplitude en section transversale dans la direction de la bande de roulement (Ø1) est présente.

4. Bandage pneumatique selon l'une quelconque des revendications 1 à 3, dans lequel l'amplitude est formée en conférant à la lamelle une forme en zigzag.

5. Bandage pneumatique, englobant sur une bande de roulement (10) plusieurs rangées de pavés définies par des rainures circonférentielles principales (14) s'étendant dans une direction circonférentielle du bandage pneumatique, et des rainures latérales (16) coupant les rainures circonférentielles principales ;

un nombre de lamelles appartenant à un pavé sur une surface de la bande de roulement étant plus élevé dans un pavé (11) agencé sur une région d'extrémité de la bande de roulement que dans un pavé (12) agencé dans une région centrale de la bande de roulement ;

**caractérisé en ce qu'**un indice de rigidité de la lamelle (F) est calculé par la formule (F) = (1+Ø1) x (1+Ø2) x (1+Ø3), sur la base d'une amplitude en section transversale dans une direction de la bande de roulement, la section transversale étant pratiquement parallèle à une surface de la bande de roulement du pavé, d'une amplitude en section transversale circonférentielle (Ø2), comme intervalle d'oscillation de la lamelle dans une section transversale du pavé dans la direction circonférentielle, et d'une amplitude en section transversale dans la direction de la largeur (03), comme intervalle d'oscillation de la lamelle dans une section transversale du pavé dans une direction de la largeur ; et

le pavé (11) agencé dans la région d'extrémité de la bande de roulement a une forme de lamelle, dans laquelle au moins une des amplitudes, l'amplitude en section transversale circonférentielle (02) et l'amplitude en section transversale dans la direction de la largeur (03) est présente, l'indice de rigidité de la lamelle (F) du pavé (11) agencé dans la région d'extrémité de la bande de roulement étant supérieur à l'indice de rigidité de la lamelle (F) du pavé (12) agencé dans la région centrale de la bande de roulement.

6. Bandage pneumatique selon la revendication 5, dans lequel le pavé (11) agencé dans la région d'extrémité de la bande de roulement a une forme de lamelle dans laquelle l'amplitude en section transversale circonférentielle (02) et l'amplitude en section transversale dans la direction de la largeur (03) sont présentes.

7. Bandage pneumatique selon l'une quelconque des revendications 5 et 6, dans lequel le pavé (11) agencé dans la région d'extrémité de la bande de roulement a une forme de lamelle dans laquelle l'amplitude en section transversale dans la direction de la bande de roulement (01) est présente.

8. Bandage pneumatique selon l'une quelconque des revendications 5 à 7, dans lequel l'amplitude est formée en conférant à la lamelle une forme en zigzag.

# FIG. 1

# FIG. 2

# FIG. 3

**FIG. 4**

11a  11a  11a  11a  11

GROOVE DEPTH
DIRECTION

φ3

TREAD WIDTH DIRECTION

**FIG. 5**

11a  11a  11a

GROOVE DEPTH
DIRECTION

TREAD WIDTH DIRECTION

FIG. 6

CL

10

11
12
12b
16
11
11c
11c
16
11

12

11

16
12

16

16

16

16

12

12

12

16

11

12

12b

16

11

11

14       14    14

FIG. 7

TREAD WIDTH DIRECTION    TREAD CIRCUMFERENCE DIRECTION

TREAD DEPTH DIRECTION

## FIG. 8

TREAD WIDTH DIRECTION

TREAD CIRCUMFERENCE DIRECTION

TREAD DEPTH DIRECTION

φ4

## FIG. 9

# FIG. 10

# FIG. 11

**EP 1 733 900 B1**

**Patent documents cited in the description**

- JP 2002321509 A

- JP 2000185526 A